# EUROPEAN PATENT SPECIFICATION

(11) **EP 2 038 332 B1**
(45) Date of publication and mention of the grant of the patent: **06.11.2013**
(21) Application number: 07798116.5
(22) Date of filing: 05.06.2007
(51) Int. Cl.: C08J 5/18, C08L 27/16

(54) **POLYVINYLIDENE FLUORIDE FILMS AND LAMINATES THEREOF**
POLYVINYLIDENFLUORIDFILME UND LAMINATE DARAUS
FILMS DE FLUORURE DE POLYVINYLIDENE ET LEURS STRATIFIES

(30) Priority: 29.06.2006 US 806147 P
(43) Date of publication of application: 25.03.2009
(73) Proprietor: Avery Dennison Corporation, Pasadena, CA 91103 (US)
(72) Inventor: TRUOG, Keith, Lawson, Crown Point, Indiana 46307 (US)
(74) Representative: Müller-Boré & Partner Patentanwälte
(86) International application number: PCT/US2007/070403
(87) International publication number: WO 2008/002747

(56) References cited:
- EP-A- 0 294 755
- EP-A- 1 411 085
- EP-A- 1 621 573
- WO-A-01/60872
- US-A- 3 459 834
- US-A- 4 581 412
- US-A- 4 988 548

## Description

### Technical Field

This invention relates generally to polyvinylidene fluoride films and more particularly to polyvinylidene fluoride films having chemical and heat resistance. The films are useful in laminate structures as protective weatherable films. The films may be laminated to fiberglass-reinforced polyester (FRP) panels.

### Background

Fiberglass reinforced polyester panels (FRP) have been used in a variety of applications, including commercial and traffic signs, architectural components and structures, including modular buildings, roof and wall systems, skylights, solar collectors, farm buildings and garage doors and industrial structures including greenhouses and factories. In order to improve the life of the panels in high humidity, high ultraviolet light and corrosive environments, protective outer films are laminated to the FRP panels.

Although panel manufacturing processes may differ, they typically require the application of high temperatures to the panel components. Laminating a protective layer to the panel during the manufacturing process requires that the protective layer be able to withstand the high temperatures of the manufacturing process and requires that the protective layer have superior chemical resistance.

Polyvinylidene fluoride (PVDF) resins have excellent weather resistance, chemical resistance, solvent resistance, wear resistance, heat resistance and flame retardance, but often have poor adhesion to thermoplastic resins. In laminate structures, the thermoplastic resin film and the vinylidene fluoride resin film tend to peel from each other. Acrylic resin has been blended with the vinylidene fluoride resin to improve adhesion to the underlying thermoplastic resin film. However, most commercially available PVDF lack the high temperature resistance and chemical resistance to survive the FRP manufacturing process.

### Summary

The present invention provides a laminate comprising a fluoropolymer film having excellent chemical and high heat resistance. The fluoropolymer film is formed from a composition comprising (a) a polyvinylidene fluoride polymer; (b) a hydroxyl functional acrylic polymer; and (c) a crosslinking agent.

In one embodiment, the fluoropolymer film is used in a laminate construction comprising a fiberglass reinforced substrate and a high temperature resistant film comprising a fluoropolymer layer formed from a composition comprising (a) a polyvinylidene fluoride polymer; (b) a hydroxyl functional acrylic polymer; and (c) a crosslinking agent.

The high temperature resistant film may contain other layers in addition to the fluoropolymer layer. In one embodiment, the high temperature resistant film includes a printed layer. In one embodiment, the film contains a polyester layer permanently adhered to the fluoropolymer layer.

### Brief Description of Drawings

FIG. 1 is a schematic cross-sectional view illustrating one embodiment of a multilayer film according to the present invention.
FIG. 2 is a schematic cross-sectional view illustrating an alternative embodiment of a multilayer film according to the present invention wherein the film includes a PVDF layer and a barrier layer.
FIG. 3 is a schematic cross-sectional view illustrating an embodiment containing a primer layer.
FIG. 4 is a schematic cross-sectional view illustrating a laminate construction including a PVDF layer, a polyester layer and a primer layer.
FIG. 5 is a schematic diagram illustrating a process for making a laminate construction wherein a PVDF film is laminated to an FRP panel.

### Detailed Description

A thermoset fluoropolymer film having chemical and heat resistance is provided. The fluoropolymer layer is formed from a composition comprising (a) a polyvinylidene fluoride polymer; (b) a hydroxyl functional acrylic polymer; and (c) a crosslinking agent.

The fluoropolymer layer composition comprises a blend of a thermoplastic fluorocarbon resin component and an acrylic resin component. The fluorocarbon resin includes at least one copolymer of vinylidene fluoride with a monomer copolymerizable therewith. The copolymerizable monomer may be, for example, tetrafluoroethylene (TFE), hexafluoropropylene (HFP), chlorotrifluoroethylene (CTFE), trifluoroethylene (VF3) or vinyl fluoride. Useful thermoplastic fluorocarbons include the polyvinylidene fluoride PVDF known as Kynar, commercially available from Arkema. This polymer provides a useful blend of durability and chemical resistance properties. Various grades of Kynar are available.

| KYNAR® PVDF GRADE | MELT VISCOSITY METHOD (ASTM D3835) 450°F K POISE @ 100 SEC-1 | MELT FLOW RATE (ASTM D 1238) 450°F g/10 MIN | MELT FLOW RATE LOAD Ib (kg) | MELTING POINT |
|---|---|---|---|---|
| PELLETS | | | | |
| 2750-01 | 20.0 - 25.0 | 4.0 - 14.0 | 27.5 (12.5) | 130 - 138°C |
| 2800-00 | 23.0 - 27.0 | 3.0 - 8.0 | 27.5 (12.5) | 140 - 145°C |
| 2800-01 | 23.0 - 27.0 | 3.0 - 8.0 | 27.5 (12.5) | 140 - 145°C |
| 2800-20 | 12.0 - 20.0 | 1.0 - 6.0 | 11.0 (5.0) | 140 - 145°C |
| 2850-00 | 23.0 - 27.0 | 3.0 - 8.0 | 27.5 (12.5) | 155 - 160°C |
| 2850-02 | 16.0 - 20.0 | 10.0 - 20.0 | 27.5 (12.5) | 155 - 160°C |
| 2850-04 | 4.0 - 8.0 | 12.0 - 18.0 | 27.5 (12.5) | 155 - 160°C |
| 2850-07 | 16.0 - 20.0 | 10.0 - 20.0 | 27.5 (12.5) | 155 - 160°C |
| 2500-20 | 5.0 - 16.0 | 1.0 - 15.0 | 8.36 (3.8) | 117 - 125°C |

| POWDER | | | | |
|---|---|---|---|---|
| 2751-00 | 20.0 - 25.0 | 4.0 - 14.0 | 27.5 (12.5) | 130 - 138°C |
| 2801-00 | 23.0 - 27.0 | 3.0 - 8.0 | 27.5 (12.5) | 140 - 145°C |
| 2821-00 | 12.0 - 20.0 | 1.0 - 6.0 | 11.0 (5.0) | 140 - 145°C |
| 2501-20 | 5.0 - 16.0 | 2.0 - 14.0 | 8.36 (3.8) | 114 - 120°C |

A particularly useful PVDF is KYNAR^{®} FLEX 2821 which is a PVDF containing HFP copolymers.

The acrylic resin component of the fluoropolymer layer includes at least one hydroxy functional acrylic resin. Examples of hydroxy functional acrylic resins include polymers derived from one or more hydroxy functional ethylenically unsaturated monomers containing either primary or secondary hydroxyl groups. These monomers include hydroxy alkyl (meth)acrylates having 1-4 carbon atoms in the alkyl groups, such as hydroxy methyl acrylate, hydroxy methylmethacrylate, hydroxy ethylacrylate, hydroxy ethyl methacrylate, hydroxy propyl methacrylate, hydroxy propyl acrylate, hydroxy butyl acrylate, hydroxy butyl methacrylate and the like. A particularly useful hydroxy functional acrylic resin is Elvacite 4402, a copolymer of methyl methacrylate, n-butyl methacrylate, hydroxyethyl methacrylate and methacrylic acid commercially available from Lucite.

A number of useful crosslinking agents for the hydroxyfunctional acrylic are known, and include, for example, aminoplast resins such as melamine formaldehyde resins, including monomeric or polymeric melamine resin and partially or fully alkylated melamine resin. Suitable crosslinking agents include hexamethylol melamine, pentamethylol melamine, tetramethylol melamine, etc. These are made by reacting 6 or less moles of formaldehyde with each mole of melamine. The reaction causes the addition of hydroxymethyl groups to the amine groups of the melamine resin. The fully or partially methylolated melamine may also be fully or partially alkylated by reacting with an alcohol, such as methanol. In acid environments (pH preferably less than 5) at elevated temperatures (preferably about 250°F), these melamine-formaldehydes react with the hydroxy groups of the acrylic resin to form complex crosslinked polymer structures.

Suitable melamine resins include those hydrophilic melamines and/or hydrophobic melamines, such as, for example, CYMEL^{®}303, CYMEL^{®}325, CYMEL^{®}1156, manufactured by Cytec; YUBAN 20N, YUBAN 20SB, YUBAN 128, manufactured by Mitsui Toatsu Chemicals, Inc.; SUMIMAL^{®}M-50W, SUMIMAL^{®}M-40N, SUMIMA^{®}L M-30W, manufactured by Sumitomo Chemical Co. Ltd, and the like, used alone or in combinations.

A particularly useful crosslinking agent is CYMEL^{®}303, a hexamethoxymethylmelamine resin, commercially available from Cytec. Melamine resins of this type may be produced as set forth in U.S. Pat. Nos. 2,906,724; 2,918,452; 2,998,410; 2,998,411; 3,107,227; 3,422,076.

A curing catalyst is typically added to catalyze the curing (i.e., crosslinking) reactions between the reactive components in the formulation. For example, when melamines are used as the crosslinking agent, a strong acid catalyst may be used to enhance the cure reaction. Such catalysts are well-known and include, without limitation, p-toluenesulfonic acid, dinonylnapthalene disulfonic acid, dodecylbenzenesulfonic acid, phenyl acid phosphate, monobutyl maleate, butyl phosphate, and hydroxy phosphate ester. Strong acid catalysts are often blocked, e.g., with an amine. Any mixture of the foregoing catalysts may be useful. In general, the catalyst is used in the amount of about 0.1 to 5%, based on the total weight of the polymeric binder.

The acrylic resin component of the fluoropolymer layer may further comprise an alkyl methacrylate. The alkyl methacrylate may be a homopolymer of methyl methacrylate or a copolymer of methyl methacrylate or ethyl methacrylate with a monomer copolymerizable therewith. The copolymerizable monomer may be, for example, a C₂-C₄ acrylate such as butyl acrylate, styrene, α-methyl styrene, acrylonitrile, acrylic acid or other ethylenically unsaturated monomer.

In one embodiment, the acrylic resin component of the fluoropolymer layer is a medium molecular weight polymethylmethacrylate resin such as Elvacite 4026, commercially available from Lucite. This acrylic resin hardens the PVDF layer and improves adhesion to the underlying substrate.

The PVDF and acrylic based formulation can be prepared as a dispersion of the PVDF and a solution of the acrylic resins. In one embodiment, the formulation is prepared by mixing the acrylic resins with a suitable organic solvent and applying heat to dissolve the resin. The mixture is then allowed to cool sufficiently before adding the PVDF component, so that the PVDF will not dissolve, but will be maintained as a dispersion in the acrylic-solvent based mixture. By maintaining the PVDF component as a dispersion in the PVDF layer, solvent evaporation during drying of the fluoropolymer layer can be improved.

To improve the weatherability of the fluoropolymer film, an ultraviolet absorber or light stabilizer or a combination of an absorber and light stabilizer may be added to the film components. Useful additives for UV resistance include benzophenones, such as 2,4-dihydroxybenzophenone and 2-hydroxy-4-n-octoxy benzophenone and hydroxybenzophenones containing sulfonic groups and the like. A commercially available UV absorber is poly-4-(2-acryloxyethoxy)-2-hydroxybenzophenone from Cytec Industries under the trade name Cyasorb^{®} UV-2126. Triazoles such as 2-phenyl-4-(2',2'-dihydroxybenzoyl)-triazole, 2-[3,5-di-(α-dimethylbenzil-2-hydroxyphenyl] benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl) benzotriazole and the like may be used. A commercially available UV absorber is 2-(2H-Benzotriazol-2-yl)-6-(1-methyl-1-phenylethyl)-4-(1,1,3,3-tetramethylbutyl) phenol from Ciba Specialty Chemicals under the trade name Tinuvin^{®} 928. Triazines, such as 3,5-dialkyl-4-hydroxyphenol derivatives of triazine, sulfur containing derivatives of dialyl-4-hydroxy phenyl triazines, hydroxy phenyl-1,3,5-triazine and the like may be used. Benzoates, such as dibenzoate of diphenylol propane, tertiary butyl benzoate of diphenyl propane and the like may be used. Oxalic acid type UV absorber, such as 2-ethoxy-2'-ethyl oxalic acid bisanilide, 2-ethoxy-5-t-butyl-2'-ethyl oxalic acid bisanilide may be used. Hindered amine UV absorbers such as bis(1,2,2,6,6-pentamethyl-4-piperidyl) sebacate, bis(1,2,2,6,6-tetramethyl-4-piperidyl) sebacate, dimethyl-2-(4-hydroxy-2,2,6,6-tetramethyl-1-piperidyl)ether, and 1-[2-3-(3,5-di-t-butyl-4-hydroxyphenyl)propyonyloxy]-2,2,6,6-T tetramethyl piperidine may be used.

In one embodiment, the fluoropolymer layer comprises a blend of about 40% to about 60% by weight of polyvinylidene polymer and about 40% to about 60% by weight of a crosslinked hydroxy functional acrylic polymer. In one embodiment, the fluoropolymer layer comprises a blend of about 50% to about 60% by weight of polyvinylidene polymer and about 40% to about 50% by weight of a crosslinked hydroxy functional acrylic polymer.

In another embodiment, the fluoropolymer layer comprises a blend of about 45% to about 60% by weight of polyvinylidene polymer; about 7% to about 12% by weight of alkyl methacrylate homopolymer or copolymer; and about 30% to about 40% by weight of a crosslinked hydroxy functional acrylic polymer. In yet another embodiment, the fluoropolymer layer comprises a blend of about 45% to about 60% by weight of polyvinylidene polymer; about 7% to about 12% by weight of alkyl methacrylate homopolymer or copolymer; and about 30% to about 40% by weight of a crosslinked hydroxy functional acrylic polymer

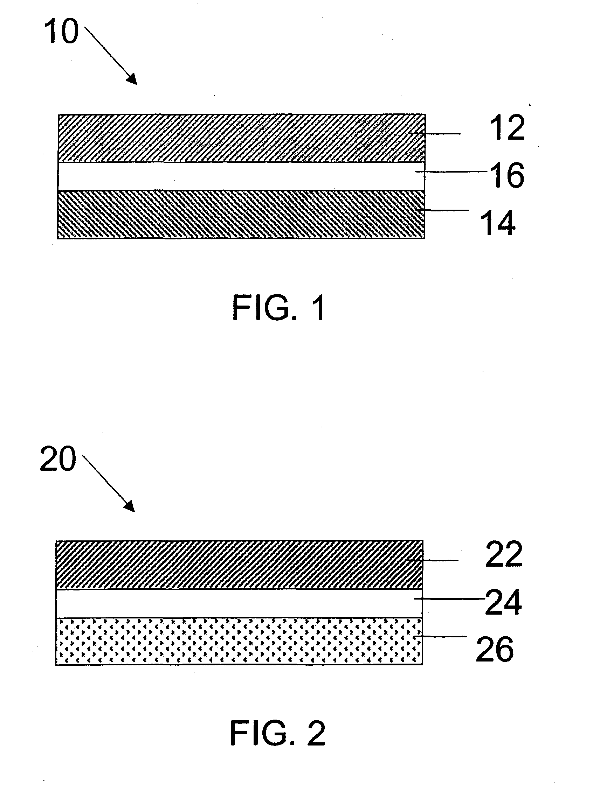

Referring to FIG. 1, a fluoropolymer film construction 10 is provided that is suitable for laminating onto a substrate, such as a FRP panel. The film construction contains a fluoropolymer layer 12 that is laminated to a removable carrier 14 having a release coating 16 thereon. In use, the carrier 14 with the release coating 16 is separated from the fluoropolymer layer 12 prior to the application of the fluoropolymer layer to a substrate. The carrier layer may be a polyester film such as polyethylene terephthalate (PET), polyethylene terephthalate-ethylene glycol modified (PETG) or polybutylene terephthalate.

FIG. 2 illustrates an embodiment of a laminate 20 wherein a fluoropolymer layer 24 is used as a barrier between a decorative multilayer dry paint transfer film 22 and the underlying substrate, which may be an FRP panel. The multilayer dry paint transfer film 22 may include one or more polyvinylidene fluoride or polyvinyl fluoride layers within the film. Such multilayer films are described in US Patent Nos. 5,203,941; 5,284,693; 5,506,031; 5,662,977 and 6,296,732. Commercially available films, such as those available from Avery Dennison Corp. under the Avloy^{®} and Graphicolor^{™} trademarks may be used as the multilayer dry paint transfer film 22. Film layer 22 may be clear, opaque or pigmented. Barrier layer 24 comprises a thermoset coating comprising (a) a polyvinylidene fluoride polymer or copolymer; (b) a methylmethacrylate homopolymer or copolymer (c) a crosslinked hydroxyl functional acrylic polymer.

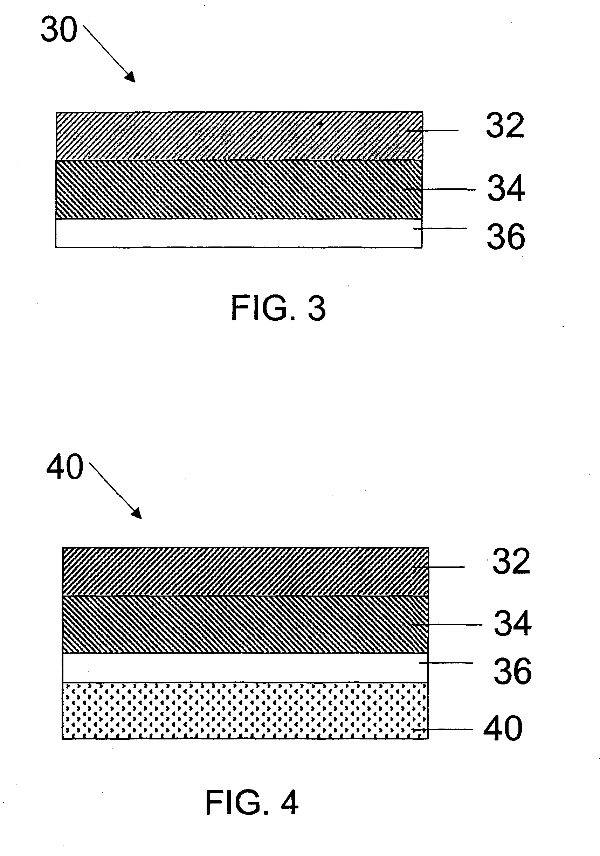

FIG. 3 illustrates an embodiment of a laminate 30 wherein a fluoropolymer layer 32 is permanently adhered to a first surface of a polyester film 34. The polyester film may comprise a biaxially oriented uncoated grade of polyester film. The polyester film 34 has a primer coating 36 on its second surface. The primer coating comprises (a) at least one polyvinylidene fluoride polymer or copolymer; (b) at least one hydroxyl functional acrylic polymer crosslinked with a melamine crosslinker and (c) an acid blocked catalyst. FIG. 4 shows the multilayer film of FIG. 3 laminated to a substrate 38, such as an FRP. In one embodiment the polyvinylidene fluoropolymer of the primer layer comprises Kynar 2500.

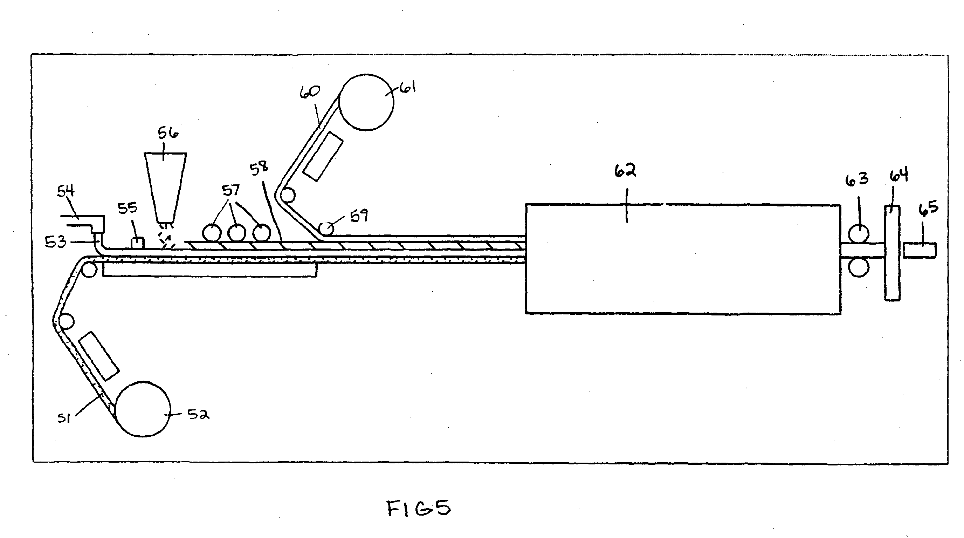

FIG. 5 schematically illustrates one embodiment of a process for laminating the PVDF film to an FRP substrate. The process is useful in the manufacture of FRP panels having improved life in high humidity, high ultraviolet light and corrosive environments. A carrier film 51 is unwound from carrier film unwind 52 which may have provisions for tension adjustment and preheating. Catalyzed polyester resin 53 is deposited onto carrier film 51 from polyester resin feed line 54 and is spread and metered by an adjustable doctor blade 55. Chopped glass is randomly distributed onto the resin from chopped glass feed 56. Wet out rolls 57 mix the resin and glass. The fluoropolymer film 60 is unwound from fluoropolymer film unwind 61 which may have provisions for tension adjustment and preheating. Nip roll 59 combines the fluoropolymer film with the glass/resin mix 58 and the laminated structure is fed into a hot air oven having multiple heating zones to control resin gel and cure points. The laminate is pulled from the oven with panel pulling system 63 to cutting system 64 to form the laminate FRP panels 65.

In one embodiment, a decorative lighting laminate is provided. The light transmitting laminate includes a transparent, light transmitting base layer and a translucent, light transmitting decorative covering film. The base layer may be prepared from a fiberglass reinforced polyester material in the form of a sheet. To the base layer, the decorative covering film is laminated. The covering film may comprise a fluoropolymer layer formed from a composition comprising (a) a polyvinylidene fluoride polymer; (b) a hydroxyl functional acrylic polymer; and (c) a crosslinking agent. The covering film may further comprise a decorative print layer. The print layer may include any pattern, image or design. The print layer may contain no pigments or may be pigmented in a single color or multiple colors. In one embodiment, the print layer has a camouflage design.

### EXAMPLES

The following examples are intended only to illustrate methods and embodiments in accordance with the invention, and as such should not be construed as imposing limitations upon the claims.

### Example 1

A PVDF layer was formulated from the following components:

| **Component** | | **Amount (Wt%)** |
|---|---|---|
| Exxate 700 | Solvent | 38.90 |
| Butyrolactone | Solvent | 9.72 |
| Elvacite 4026 | MMA copolymer | 4.50 |
| Elvacite 4402 | Hydroxyfunctional acrylic resin | 13.50 |
| Cyasorb UV2126 | Benzophenone UV absorber | 0.50 |
| Tinuvin 928 | Hydroxyphenyl benzotriazole UV stabilizer | 1.74 |
| Kynar 2821LV* | PVDF/HFP copolymer | 27.00 |
| Cymel 303 | Hexamethoxymethyl melamine crosslinker | 3.38 |
| Byk 451 | Blocked acid catalyst | 0.77 |

| | | |
|---|---|---|
| *Air milled to a mean particle size of < 8µm with a maximum particle size of < 30µm. | | |

The Elvacite 4026, Elvacite 4402, Cyasorb UV2126 and Tinuvin 928 are first dissolved in the Exxate 700 and butyrolactone solvents at a temperature of 130°F and allowed to cool to below 85°F. The PVDF is then dispersed in the resin solution using a high speed mixer. The temperature of the PVDF dispersion is kept below 100°F to avoid gelation of the dispersion. The Cymel 303 and Byk 451 are then added to the dispersion. If necessary, the dispersion is thinned with a 4:1 blend of Exxate 700 and butyrolactone solvent.

A fluoropolymer film is prepared from the resulting dispersion by casting the dispersion onto a polyester carrier film that has been coated with a release coating and then fusing the film in an impinging air drying oven. The carrier film is removed prior to lamination of the fluoropolymer film onto an FRP substrate.

### Example 2

A PVDF layer was formulated from the following components:

| **Component** | | **Amount (Wt%)** |
|---|---|---|
| Exxate 700 | Solvent | 38.37 |
| Butyrolactone | Solvent | 9.59 |
| Elvacite 4402 | Hydroxyfunctional acrylic resin | 17.75 |
| Cyasorb UV2126 | Benzophenone UV absorber | 0.49 |
| Tinuvin 928 | Hydroxyphenyl benzotriazole UV stabilizer | 1.72 |
| Kynar 2821LV | PVDF/HFP copolymer | 26.63 |
| Cymel 303 | Hexamethoxymethyl melamine crosslinker | 4.44 |
| Byk 451 | Blocked acid catalyst | 1.02 |

The Elvacite 4402, Cyasorb UV2126 and Tinuvin 928 are first dissolved in the Exxate 700 and butyrolactone solvents at a temperature of 130°F and allowed to cool to below 85°F. The PVDF is then dispersed in the resin solution using a high speed mixer. The temperature of the PVDF dispersion is kept below 100°F to avoid gelation of the dispersion. The Cymel 303 and Byk 451 are then added to the dispersion. If necessary, the dispersion is thinned with a 4:1 blend of Exxate 700 and butyrolactone solvent.

A fluoropolymer film is prepared from the resulting dispersion by casting the dispersion onto a polyester carrier film that has been coated with a release coating and then fusing the film in an impinging air drying oven. The carrier film is removed prior to lamination of the fluoropolymer film onto an FRP substrate.

While the invention has been explained in relation to embodiments, it is to be understood that various modifications thereof will become apparent to those skilled in the art upon reading the specification. Therefore, it is to be understood that the inventions disclosed herein is intended to cover such modifications as fall within the scope of the appended claims, and to cover insubstantial variations thereof.

## Claims

1. A laminate comprising:
a heat and chemical resistant film comprising a fluoropolymer layer formed from a composition comprising (a) a thermoplastic polyvinylidene fluoride copolymer of vinylidene fluoride and hexafluoropropylene; (b) a hydroxyl functional acrylic polymer; and (c) a crosslinking agent; and
a polyester carrier layer adhered to the film.

2. The laminate of claim 1 wherein the crosslinking agent comprises a melamine resin.

3. The laminate of claim 1 or 2 wherein the fluoropolymer layer composition comprises 40-60% by weight polyvinylidene fluoride copolymer and 40-60% by weight hydroxyl functional acrylic polymer.

4. The laminate of any one of claims 1-3 wherein the fluoropolymer layer composition further comprises an alkyl methacrylate polymer or copolymer, preferably polymethylmethacrylate.

5. The laminate of any one of claims 1-4 wherein the fluoropolymer layer composition further comprises at least one UV stabilizer.

6. The laminate of any one of claims 1-5 wherein the hydroxyl functional acrylic polymer comprises a copolymer of methyl methacrylate, n-butyl methacrylate, hydroxyethyl methacrylate and methacrylic acid.

7. The laminate of any one of claims 1-6, wherein the polyester layer is permanently adhered to the film and the laminate further comprises a primer layer between the fluoropolymer layer and the polyester layer, the primer layer comprising a polyvinylidene fluoride copolymer and a hydroxyl functional acrylic polymer crosslinked with a melamine crosslinker.

8. The laminate of any one of claims 1-7 further comprising a printed layer.

9. A laminate comprising a fiberglass reinforced substrate and a high temperature resistant film comprising a fluoropolymer layer formed from a composition comprising (a) a thermoplastic polyvinylidene fluoride copolymer of vinylidene fluoride and hexafluoropropylene; (b) a hydroxyl functional acrylic polymer; and (c) a crosslinking agent.

10. A method of making a fiberglass reinforced laminate comprising:
providing a carrier film;
depositing a polyester resin onto the carrier film;
distributing chopped glass onto the polyester resin to form a fiberglass reinforced substrate;
providing a fluoropolymer film comprising a fluoropolymer layer formed from a composition comprising (a) a thermoplastic polyvinylidene fluoride copolymer of vinylidene fluoride and hexafluoropropylene; (b) a hydroxyl functional acrylic polymer; and (c) a crosslinking agent;
laminating the fluoropolymer film to the fiberglass reinforced substrate;
curing the resin to form a fiberglass reinforced laminate.

11. The method of claim 10 wherein the crosslinking agent comprises a melamine resin.

12. The method of claim 10 or 11 wherein the fluoropolymer layer composition comprises 40-60% by weight polyvinylidene fluoride copolymer and 40-60% by weight hydroxyl functional acrylic polymer.

13. The method of any one of claims 10-12 wherein the fluoropolymer layer composition further comprises an alkyl methacrylate polymer or copolymer, preferably polymethylmethacrylate.

14. The method of anyone of claims 10-13 wherein the hydroxyl functional acrylic polymer comprises a copolymer of methyl methacrylate, n-hutyl methacrylate, hydroxyethyl methacrylate and methacrylic acid.

## Patentansprüche

1. Laminat, umfassend:
eine wärme- und chemisch beständige Folie, umfassend eine Fluorpolymerschicht, gebildet aus einer Zusammensetzung, umfassend (a) ein thermoplastisches Polyvinylidenfluoridcopolymer von Vinylidenfluorid und Hexafluorpropylen, (b) ein Hydroxyl-funktionales Acrylpolymer, und (c) ein Vernetzungsmittel; und
eine Polyesterträgerschicht, gebunden an die Folie.

2. Laminat gemäß Anspruch 1, wobei das Vernetzungsmittel ein Melaminharz umfaßt.

3. Laminat gemäß Anspruch 1 oder 2, wobei die Fluorpolymerschichtzusammensetzung 40 - 60 Gew.-% Polyvinylidenfluoridcopolymer und 40 - 60 Gew.-% Hydroxyl-funktionales Acrylpolymer umfaßt.

4. Laminat gemäß einem der Ansprüche 1 bis 3, wobei die Fluorpolymerschichtzusammensetzung weiter ein Alkylmethacrylatpolymer oder -copolymer, vorzugsweise Polymethylmethacrylat, umfaßt.

5. Laminat gemäß einem der Ansprüche 1 bis 4, wobei die Fluorpolymerschichtzusammensetzung weiter mindestens einen UV-Stabilisator umfaßt.

6. Laminat gemäß einem der Ansprüche 1 bis 5, wobei das Hydroxyl-funktionale Acrylpolymer ein Copolymer von Methylmethacrylat, n-Butylmethacrylat, Hydroxyethylmethacrylat und Methacrylsäure umfaßt.

7. Laminat gemäß einem der Ansprüche 1 bis 6, wobei die Polyesterschicht permanent an die Folie gebunden ist und das Laminat eine Primerschicht zwischen der Fluorpolymerschicht und der Polyesterschicht umfaßt, wobei die Primerschicht ein Polyvinylidenfluidcopolymer und ein Hydroxyl-funktionales Acrylpolymer, vernetzt mit einem Melaminvernetzungsmittel, umfaßt.

8. Laminat gemäß einem der Ansprüche 1 bis 7, weiter umfassend eine Druckschicht.

9. Laminat, umfassend ein Glasfaser-verstärktes Substrat und eine hochtemperaturbeständige Folie, umfassend eine Fluorpolymerschicht, gebildet aus einer Zusammensetzung, umfassend (a) ein thermoplastisches Polyvinylidenfluoridcopolymer von Vinylidenfluorid und Hexafluorpropylen, (b) ein Hydroxyl-funktionales Acrylpolymer und (c) ein Vernetzungsmittel.

10. Verfahren zur Herstellung eines Glasfaser-verstärkten Laminats, umfassend:
das Bereitstellen einer Trägerfolie,
das Abscheiden eines Polyesterharzes auf der Trägerfolie,
das Verteilen von Schnittglas auf dem Polyesterharz unter Bildung eines Glasfaser-verstärkten Substrats,
das Bereitstellen einer Fluorpolymerfolie, umfassend eine Fluorpolymerschicht, gebildet aus einer Zusammensetzung, umfassend (a) ein thermoplastisches Polyvinylidenfluoridcopolymer von Vinylidenfluorid und Hexafluorpropylen, (b) ein Hydroxyl-funktionales Acrylpolymer und (c) ein Vernetzungsmittel,
das Laminieren der Fluorpolymerfolie auf das Glasfaser-verstärkte Substrat,
das Härten des Harzes unter Bildung eines Glasfaser-verstärkten Laminats.

11. Verfahren gemäß Anspruch 10, wobei das Vernetzungsmittel ein Melaminharz umfaßt.

12. Verfahren gemäß Anspruch 10 oder 11, wobei die Fluorpolymerschichtzusammensetzung 40 - 60 Gew.-% Polyvinylidenfluoridcopolymer und 40 - 60 Gew.-% Hydroxyl-funktionales Acrylpolymer umfaßt.

13. Verfahren gemäß einem der Ansprüche 10 - 12, wobei die Fluorpolymerschichtzusammensetzung weiter ein Alkylmethacrylatpolymer oder -copolymer, vorzugsweise Polymethylmethacrylat, umfaßt.

14. Verfahren gemäß einem der Ansprüche 10 - 13, wobei das Hydroxyl-funktionale Acrylpolymer ein Copolymer von Methylmethacrylat, n-Butylmethacrylat, Hydroxyethylmethacrylat und Methacrylsäure umfaßt.

## Revendications

1. Stratifié comprenant :
un film résistant à la chaleur et aux agents chimiques comprenant une couche de fluoropolymère formée à partir d'une composition comprenant (a) un copolymère de fluorure de polyvinylidène thermoplastique à base de fluorure de vinylidène et d'hexafluoropropylène, (b) un polymère acrylique à groupe fonctionnel hydroxyle ; et (c) un agent de réticulation ; et
une couche support polyester collée sur le film.

2. Stratifié selon la revendication 1, dans lequel l'agent de réticulation comprend une résine mélamine.

3. Stratifié selon la revendication 1 ou 2, dans lequel la composition de couche de fluoropolymère comprend de 40 à 60% en poids de copolymère de fluorure de polyvinylidène et de 40 à 60% en poids de polymère acrylique à groupe fonctionnel hydroxyle.

4. Stratifié selon l'une quelconque des revendications 1 à 3, dans lequel la composition de couche de fluoropolymère comprend en outre un polymère ou copolymère de méthacrylate d'alkyle, de préférence, du polyméthacrylate de méthyle.

5. Stratifié selon l'une quelconque des revendications 1 à 4, dans lequel la composition de couche de fluoropolymère comprend en outre au moins un stabilisateur d'UV.

6. Stratifié selon l'une quelconque des revendications 1 à 5, dans lequel le polymère acrylique à groupe fonctionnel hydroxyle comprend un copolymère de méthacrylate de méthyle, de méthacrylate de n-butyle, de méthacrylate d'hydroxyéthyle et d'acide méthacrylique.

7. Stratifié selon l'une quelconque des revendications 1 à 6, dans lequel la couche de polyester est collée de manière permanente sur le film, et le stratifié comprend en outre une couche primaire entre la couche de fluoropolymère et la couche de polyester, la couche primaire comprenant un copolymère de fluorure de polyvinylidène et un polymère acrylique à groupe fonctionnel hydroxyle réticulé avec un agent de réticulation à base de mélamine.

8. Stratifié selon l'une quelconque des revendications 1 à 7 comprenant en outre une couche imprimée.

9. Stratifié comprenant un substrat renforcé par fibre de verre, et un film résistant à haute température comprenant une couche de fluoropolymère formée à partir d'une composition comprenant (a) un copolymère de fluorure de polyvinylidène thermoplastique à base de fluorure de vinylidène et d'hexafluoropropylène ; (b) un polymère acrylique à groupe fonctionnel hydroxyle ; et (c) un agent de réticulation.

10. Procédé de fabrication d'un stratifié renforcé par fibre de verre comprenant :
la préparation d'un film support ;
le dépôt d'une résine polyester sur le film support ;
la répartition de verre coupé sur la résine polyester afin de former un substrat renforcé par fibres de verre ;
la préparation d'un film de fluoropolymère comprenant une couche de fluoropolymère formée à partir d'une composition comprenant (a) un copolymère de fluorure de polyvinylidène thermoplastique à base de fluorure de vinylidène et d'hexafluoropropylène ; (b) un polymère acrylique à groupe fonctionnel hydroxyle ; et (c) un agent de réticulation ;
le laminage du film de fluoropolymère sur le substrat renforcé par fibre de verre ;
le durcissement de la résine afin de former un stratifié renforcé par fibre de verre.

11. Procédé selon la revendication 10, dans lequel l'agent de réticulation comprend une résine mélamine.

12. Procédé selon la revendication 10 ou 11, dans lequel la composition de couche de fluoropolymère comprend de 40 à 60% en poids de copolymère de fluorure de polyvinylidène et de 40 à 60% en poids de polymère acrylique à groupe fonctionnel hydroxyle.

13. Procédé selon l'une quelconque des revendications 10 à 12, dans lequel la composition de couche de fluoropolymère comprend en outre un polymère ou copolymère de méthacrylate d'alkyle, de préférence, du polyméthacrylate de méthyle.

14. Procédé selon l'une quelconque des revendications 10 à 13, dans lequel le polymère acrylique à groupe fonctionnel hydroxyle comprend un copolymère de méthacrylate de méthyle, de méthacrylate de n-butyle, de méthacrylate d'hydroxyéthyle et d'acide méthacrylique.
